# FASCICULE DE BREVET EUROPEEN

(11) **EP 3 417 591 B1**
(45) Date de publication et mention de la délivrance du brevet: **05.02.2020**
(21) Numéro de dépôt: 17709140.2
(22) Date de dépôt: 10.02.2017
(51) Int. Cl.: H04L 29/06, H04L 29/08, H04W 80/10

(54) **PROCÉDÉ ET SERVEUR DE SÉLECTION D'UN SERVEUR D'ENTRÉE D'UN RÉSEAU DE COMMUNICATION IMS**
VERFAHREN UND SERVER ZUR AUSWAHL EINES EINGABESERVERS EINES IMS-KOMMUNIKATIONSNETZWERKS
METHOD AND SERVER FOR SELECTING A REGISTRATION SERVER IN AN IMS COMMUNICATION NETWORK

(30) Priorité: 15.02.2016 FR 1651200
(43) Date de publication de la demande: 26.12.2018
(73) Titulaire: Orange, 75015 Paris (FR)
(72) Inventeur: BOUVET, Bertrand, 22700 Perros Guirec (FR); BOIZARD, Stéphane, 31620 Fronton (FR)
(86) Numéro de dépôt international: PCT/FR2017/050309
(87) Numéro de publication internationale: WO 2017/140971

(56) Documents cités:
- KR-A- 20110 040 151
- US-A1- 2004 146 040
- US-A1- 2008 256 251
- US-A1- 2015 201 320

## Description

L'invention se situe dans le domaine des réseaux de télécommunication. Elle concerne un dispositif et un procédé de mise en communication de terminaux reliés par un réseau de communication IP (pour Internet Protocol en anglais).

Pour pouvoir utiliser les services de communication d'un réseau de communication de type IMS (pour IP Internet Proocol Multimedia Subsystem en anglais), un terminal doit s'enregistrer dans le réseau de communication IMS. Pour cela, le terminal doit avoir connaissance de l'adresse IP d'un serveur servant de point d'entrée au réseau de communication IMS. Un tel serveur est connu de l'homme du métier sous le nom de P-CSCF (pour Proxy Call State Call Control en anglais).

Pour un réseau de communication IMS fixe, le terminal obtient l'adresse IP du serveur P-CSCF à partir de son fichier de configuration VoIP (pour Voice Over IP) selon le protocole TR-104/TR069 défini par l'ADSL Forum. Le terminal obtient alors soit une adresse IP du P-CSCF avec un numéro de port (supérieur à 1024) et un protocole (UDP, TCP ou TLS) à utiliser lors d'échanges de messages SIP (pour Session Initiation Protocol) avec le P-CSCF, soit un nom de domaine FQDN (pour Fully Qualified Domain Name en anglais) du P-CSCF. Dans ce dernier cas, le terminal doit alors interroger un serveur DNS (pour Domain Server Name en anglais) pour obtenir l'adresse IP du P-CSCF, le numéro de port et le protocole à utiliser, via une requête DNS SRV.

Pour un réseau de communication IMS mobile de type ViLTE/VoLTE/VoWIFI (pour Vidéo over LTE, Long Term Evolution, Voice over LTE et Voice over WIFI), le terminal obtient uniquement l'adresse IP du P-CSCF selon le protocole PCO (pour Parameters Configuration Options) du 3GPP (pour Third Génération Partnership Project). Lorsque la normalisation de ces services sera terminée, le terminal pourra utiliser une fonction Device Management selon le protocole http/HTTPS ou OMA-DM définie par le standard GSMA (pour Group Spécial Mobile Association) qui permet de fournir l'adresse IP, port et protocole ou un nom de domaine du P-CSCF dans un fichier de configuration.

Avec de tels mécanismes, il apparait que le terminal et le P-CSCF sont contraints d'utiliser le port 5060 et les protocoles UDP et TCP pour communiquer entre eux dès lors que le numéro de port et le protocole de transport à utiliser ne sont pas explicitement fournis au terminal. Une telle contrainte impacte les performances d'un serveur P-CSCF d'un opérateur de réseaux de communication lorsque celui-ci a mis en place des traitements particuliers en fonction des services fournis par le P-CSCF. Par exemple, il est courant pour un opérateur d'appliquer un mécanisme de HMR (pour Header Manipulation Rules) qui permet de manipuler (ajouter, supprimer, modifier) certains contenus ou entêtes de messages SIP. De telles manipulations sont nécessaires lorsque des terminaux ne sont pas totalement compatibles avec l'implémentation du protocole SIP mise en œuvre au niveau du P-CSCF ou pour résoudre des contraintes de compatibilité SIP de certains nœuds du réseau de communication.

De telles manipulations HMR sont couteuses en termes de ressources du P-CSCF car le P-CSCF doit analyser tous les messages SIP qu'il reçoit pour savoir si des manipulations de HMR sont nécessaires et lesquelles.

Le document US 2004/146040 décrit un procédé fournissant un accès à un sous-système IMS à un utilisateur se trouvant dans un réseau visité ne fournissant pas de service IMS. Le document US 2008/0256251 décrit un mécanisme permettant de s'assurer que le même serveur proxy est sélectionné par différents mécanismes de découverte de serveur proxy exécutés par un élément de contrôle du réseau et par un terminal respectivement. Le document KR 20110040151 décrit une solution pour distribuer de manière efficace le traitement d'un appel d'un terminal sur un P-CSCF lorsque plusieurs P-CSCF sont accessibles par ce terminal dans un réseau IMS.

Un des buts de l'invention est d'apporter des améliorations par rapport à l'état de la technique.

Elle propose à cet effet un procédé de sélection d'un serveur d'entrée d'un réseau de communication IMS, mis en œuvre par un serveur proxy dudit réseau. Un tel procédé comprend, suite à la réception en provenance d'un terminal, d'un message d'enregistrement envoyé selon le protocole SIP, les étapes d'obtention d'une valeur d'au moins un champ du message d'enregistrement SIP, ledit champ étant représentatif d'une caractéristique propre au terminal, de sélection d'un serveur d'entrée, à partir d'au moins ladite valeur obtenue, et d'envoi au terminal d'un message SIP de redirection comprenant une adresse IP dudit serveur d'entrée sélectionné.

Le procédé selon l'invention permet ainsi de sélectionner, pour un terminal, un point d'entrée du réseau de communication IMS à partir d'une caractéristique propre audit terminal. Une telle caractéristique peut correspondre au type du terminal, à son système d'exploitation, aux services supportés par le terminal, à son type d'identité publique, à son type d'accès, etc...

Il est ainsi possible d'alléger la charge des serveurs point d'entrée du réseau en distinguant les terminaux que ces points d'entrée ont à gérer en fonction des caractéristiques de ces terminaux. L'application de traitements HMR spécifiques sur les entêtes de messages SIP par les serveurs points d'entrée est ainsi facilitée.

Selon un autre exemple, sélectionner un P-CSCF en fonction du type d'identité publique du terminal (fixe, mobile) permet d'optimiser les mécanismes de routage lors de la réception ou de l'émission d'une communication téléphonique.

Avantageusement, le serveur proxy redirige le terminal vers le serveur d'entrée sélectionné de sorte que le serveur d'entrée sélectionné effectue l'enregistrement du terminal dans le réseau de communication IMS. Le serveur proxy ne reçoit donc que le premier message d'enregistrement émis par les terminaux qui souhaitent s'enregistrer sur le réseau de communication IMS. Il n'a donc pas à analyser l'entête de tous les messages SIP émis par ces terminaux.

L'invention concerne également un procédé d'enregistrement d'un terminal au sein d'un réseau de communication IMS, mis en œuvre par ledit terminal. Un tel procédé d'enregistrement comprend des étapes d'envoi d'un premier message d'enregistrement à un serveur proxy du réseau de communication IMS, ledit premier message d'enregistrement comprenant au moins un champ représentatif d'une caractéristique propre au terminal, de réception, en provenance du serveur proxy, d'un message de redirection comprenant une adresse IP d'un serveur d'entrée du réseau de communication IMS, le serveur d'entrée étant sélectionné à partir d'une valeur dudit au moins un champ et ayant une configuration adaptée à ladite caractéristique, et d'envoi d'un deuxième message d'enregistrement audit serveur d'entrée du réseau de communication IMS.

Le terminal dispose ainsi pour s'enregistrer auprès du réseau de communication, d'une adresse IP d'un serveur P-CSCF sélectionné en fonction d'une caractéristique propre au terminal. Le terminal peut alors s'enregistrer auprès d'un P-CSCF configuré en fonction de cette caractéristique, ce qui permet d'améliorer le service rendu au terminal. Par exemple, le temps d'établissement d'un appel entrant/sortant est diminué car il y a alors moins de traitements HMR et ceux-ci sont adaptés aux types de terminaux utilisant le P-CSCF sélectionné. Il est ainsi possible de définir des HMR dédiés aux types de terminaux gérés par le P-CSCF sélectionné, par exemple en supprimant de l'offre SDP (pour Session Description Protocol) des codecs non supportés de sorte à limiter la taille des paquets IP et éviter la fragmentation des paquets IP.

Les différents modes ou caractéristiques de réalisation mentionnés ci-après peuvent être ajoutés indépendamment ou en combinaison les uns avec les autres, aux caractéristiques du procédé de sélection d'un serveur d'entrée défini ci-dessus ou aux caractéristiques du procédé d'enregistrement d'un terminal défini ci-dessus.

Selon un mode particulier de réalisation de l'invention, le champ du message d'enregistrement est un champ User Agent SIP. Avantageusement, le champ User Agent SIP permet de déterminer le type du terminal et notamment le système d'exploitation du terminal (Apple™, Androïd™, Microsoft™) ainsi que le numéro de version. Ce mode particulier de réalisation de l'invention permet de déployer et de gérer plus facilement des serveurs P-CSCF qui sont adaptés à traiter seulement une certaine catégorie de terminaux.

Selon un autre mode particulier de réalisation de l'invention, le champ du message d'enregistrement est un champ SIP PANI. Le champ SIP PANI (Private Access Network Info) permet d'obtenir notamment le type d'accès (2G, 3G, 4G, WIFI, ADSL, Fibre, Câble, etc...) du terminal au réseau de communication, et les identifiants de cellule dans le cas de réseau cellulaire 2G/3G/4G. Avantageusement, l'invention permet de sélectionner un P-CSCF en fonction de la technologie d'accès du terminal et ainsi d'adapter par exemple la qualité de service (QoS pour quality of service en anglais) en fonction de la technologie d'accès, l'obtention de la localisation du terminal, ou encore le traitement d'un message d'urgences en fonction de la localisation. Ce mode particulier de réalisation de l'invention permet de réduire les coûts (licence logicielle, niveau de redondance des équipements, équipement spécifique,...) en utilisant des plateformes spécialisées en fonction de la technologie d'accès.

Selon un autre mode particulier de réalisation de l'invention, le message de redirection comprend un numéro de port et un protocole déterminés par le serveur proxy en fonction d'un champ du message d'enregistrement reçu par le serveur proxy. Avantageusement, ce mode particulier de réalisation de l'invention permet de déterminer le numéro de port et le protocole à utiliser par le terminal pour communiquer avec le serveur P-CSCF sélectionné, en fonction des caractéristiques du terminal, par exemple en fonction des services supportés par le terminal tels que ceux indiqués dans le champ « features tags » ou +g.3gpp.icsi-ref d'un message SIP REGISTER.

Selon un autre mode particulier de réalisation de l'invention, lorsque le serveur proxy reçoit un premier message d'enregistrement en provenance d'un autre terminal distinct du premier terminal et comprenant une identité publique identique à l'identité publique dudit premier terminal, le serveur proxy sélectionne pour l'autre terminal, le même serveur d'entrée que le serveur d'entrée sélectionné pour le premier terminal.

Dans ce mode particulier de réalisation de l'invention, des terminaux partageant une même identité publique sont enregistrés via un même serveur d'entrée au réseau de communication IMS. Avantageusement, les ressources du réseau de communication IMS sont optimisées, notamment lors de la réception de communications à destination de ladite identité publique. De plus, les terminaux auront plus de chance d'être notifiés d'une session entrante dans des délais identiques puisque la signalisation d'appel SIP empruntera le même chemin jusqu'à l'accès.

L'invention concerne également un serveur proxy d'un réseau de communication IMS, comprenant un module de traitement configuré pour, sur réception par un module de communication d'un message d'enregistrement envoyé selon le protocole SIP par un terminal:
- obtenir une valeur d'un champ du message d'enregistrement SIP, ledit champ étant représentatif d'une caractéristique propre au terminal,
- sélectionner un serveur d'entrée ayant une configuration adaptée à ladite caractéristique, à partir de la valeur obtenue,
- commander l'envoi par le module de communication au terminal d'un message SIP de redirection comprenant une adresse IP dudit serveur d'entrée sélectionné.

L'invention concerne également un terminal comprenant un module de communication apte à :
- envoyer un premier message d'enregistrement à un serveur proxy du réseau de communication IMS, ledit premier message d'enregistrement comprenant au moins un champ représentatif d'une caractéristique propre au terminal,
- recevoir, en provenance du serveur proxy, un message de redirection comprenant une adresse IP d'un serveur d'entrée du réseau de communication IMS, le serveur d'entrée étant sélectionné à partir d'une valeur dudit au moins un champ et ayant une configuration adaptée à ladite caractéristique,
- envoyer un deuxième message d'enregistrement audit serveur d'entrée du réseau de communication IMS.

Dans un mode particulier de réalisation de l'invention, les différentes étapes du procédé de sélection d'un serveur d'entrée du procédé d'enregistrement d'un terminal sont mises en œuvre par des instructions de programmes d'ordinateurs.

En conséquence, l'invention vise aussi des programmes d'ordinateur sur un support d'informations, ces programmes étant susceptibles d'être mis en œuvre respectivement dans un terminal ou plus généralement dans un ordinateur, ces programmes comportant respectivement des instructions adaptées à la mise en œuvre des différentes étapes du procédé de sélection d'un serveur d'entrée et du procédé d'enregistrement d'un terminal qui viennent d'être décrits.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique ou électronique, par exemple une clé USB ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution des procédés en question.

Les avantages du serveur de sélection d'un serveur d'entrée, du terminal, des programmes d'ordinateur et des supports d'informations sont identiques à ceux présentés en rapport avec le procédé de sélection d'un serveur d'entrée et avec le procédé d'enregistrement d'un terminal.

### Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels:
- la figure 1 illustre un environnement de mise en œuvre de l'invention selon un mode particulier de réalisation de l'invention,
- la figure 2 illustre des étapes du procédé de sélection d'un serveur d'entrée d'un réseau de communication IMS et des étapes du procédé d'enregistrement d'un terminal selon un mode particulier de réalisation de l'invention,
- les figures 3 et 4 illustrent schématiquement respectivement un dispositif de sélection d'un serveur d'entrée et un terminal aptes à mettre en œuvre respectivement le procédé de sélection d'un serveur d'entrée d'un réseau de communication IMS et le procédé d'enregistrement d'un terminal selon un mode particulier de réalisation de l'invention.

### Description d'un mode particulier de réalisation de l'invention

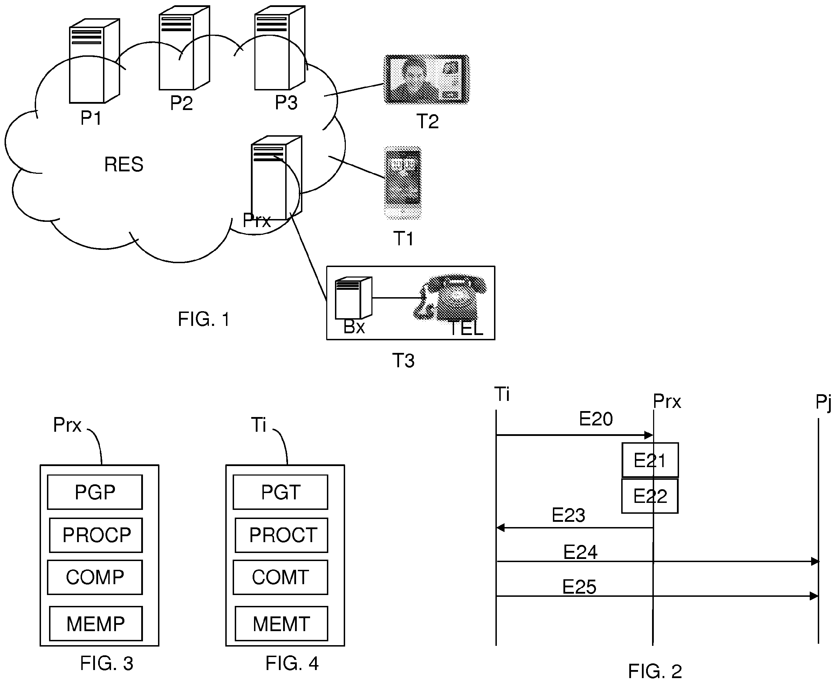

La figure 1 illustre un environnement de mise en œuvre de l'invention selon un mode particulier de réalisation de l'invention. La figure 1 comprend un réseau de communication RES basé sur une architecture IMS. Le réseau de communication RES est un sous-système IMS d'un réseau de données IP d'un opérateur de communication. Le sous-système IMS est par exemple un cœur de réseau présentant une architecture de réseau IMS telle qu'introduite par l'organisme de normalisation 3GPP (« *3^{rd} Generation Partnership Project* ») pour les réseaux mobiles.

Classiquement, le réseau de communication RES est interconnecté avec au moins un réseau d'accès fixe ou mobile (non représenté) via lequel des terminaux se connectent pour accéder aux services fournis par l'opérateur. Le réseau de communication RES est ici présenté de manière simplifiée et seuls les éléments nécessaires à la compréhension de l'invention sont représentés. Le réseau de communication RES comprend un ensemble de serveurs d'entrée au réseau RES : P1, P2, P3. Les serveurs d'entrées P1, P2 et P3 sont des serveurs P-CSCF (pour Proxy Call State Control Function).

Des terminaux T1, T2 et T3 sont connectés au réseau de communication RES par l'intermédiaire de réseaux d'accès (non représentés). Le terminal T1 est par exemple un smartphone basé sur un système d'exploitation OS1 et connecté au réseau RES via un réseau d'accès mobile 4G. Le terminal T2 est par exemple un smartphone basé sur un système d'exploitation OS2 et connecté au réseau RES via également un réseau d'accès mobile 4G.

On suppose ici que le réseau de communication IMS RES est un sous-système interconnecté à la fois à des réseaux d'accès mobile 3G/4G et à la fois à des réseaux d'accès fixe (ADSL, Fibre, câble). Le terminal T3 est par exemple composé par un téléphone fixe TEL connecté à un port FXS d'une passerelle résidentielle Bx. La passerelle résidentielle Bx est connectée à un réseau fixe (non représenté) interconnecté lui-même avec le sous-système IMS RES. La passerelle domestique Bx permet d'offrir aux utilisateurs du téléphone TEL un service de communication VoIP (pour Voix sur IP) via le réseau RES. Par la suite, les opérations effectuées par le terminal T3 sont en fait essentiellement mises en œuvre par la passerelle domestique Bx connecté au téléphone fixe TEL.

Pour accéder aux services de communication fournis par le réseau RES, les terminaux T1 à T3 doivent s'enregistrer auprès du réseau de communication RES en envoyant un message REGISTER selon le protocole SIP à un serveur P-CSCF du réseau RES. L'adresse du P-CSCF auprès duquel un terminal doit s'enregistrer est fournie soit via un fichier de configuration VoIP fourni par l'opérateur au terminal lorsque l'utilisateur du terminal s'abonne auprès de l'opérateur, soit via le protocole PCO lorsque le terminal s'attache à un réseau LTE ou Wifi. Le terminal obtient soit directement l'adresse IP du P-CSCF, soit un nom de domaine pour lequel le terminal émet une requête DNS vers un serveur DNS pour obtenir l'adresse IP correspondante.

Selon l'invention, l'opérateur fournit maintenant via le fichier de configuration VoIP ou le protocole PCO une adresse IP ou un nom de domaine relatif à un serveur proxy (Prx sur la figure 1) apte à sélectionner un serveur P-CSCF selon un mode particulier de réalisation de l'invention.

Ainsi, selon l'invention, un terminal qui souhaite s'enregistrer auprès du réseau RES envoie un message SIP REGISTER auprès du serveur proxy Prx qui va sélectionner le serveur P-CSCF le plus approprié pour le terminal et renvoyer cette information au terminal pour qu'il s'enregistre auprès du serveur P-CSCF sélectionné.

Des étapes du procédé de sélection d'un serveur d'entrée d'un réseau de communication IMS et des étapes du procédé d'enregistrement d'un terminal sont maintenant décrites selon un mode particulier de réalisation de l'invention en relation avec la figure 2. La référence Ti désigne un terminal parmi les terminaux T1 à T3 de la figure 1, et Pj un serveur P-CSCF sélectionné parmi les serveurs P1 à P3 de la figure 1.

Un ensemble de critères de sélection d'un serveur P-CSCF est enregistré en mémoire du serveur proxy Prx pour que le serveur proxy Prx sélectionne en fonction de ces critères un serveur P-CSCF approprié pour le terminal Ti. De tels critères de sélection sont basés sur une caractéristique propre au terminal Ti obtenue depuis un champ d'un message SIP REGISTER envoyé par le terminal Ti. Une telle caractéristique propre au terminal peut correspondre:
- au système d'exploitation du terminal, cette information est indiquée dans un champ User Agent SIP du message REGISTER,
- à l'identité publique (IMPU pour IP Multimedia Public Identity en anglais) du terminal, indiquée dans le champ FROM ou TO du message REGISTER,
- au type d'accès utilisé par le terminal, indiqué dans le champ PANI du message REGISTER,
- au fournisseur du terminal et/ou à sa version logicielle, indiqués via la valeur IMEI (International Mobile Equipement Identity en anglais) du terminal, cette valeur est présente dans le champ sip.instance de l'adresse de contact AoC du message REGISTER,
- aux services supportés par le terminal, indiqués dans le champ « features tags » du message REGISTER ou dans le champ ICSI (pour IMS Communication Service Identifier en anglais),
- aux méthodes SIP gérées par le terminal, indiquées dans le champ « Allow » du message REGISTER,
- à la priorité du terminal, indiquée par le paramètre q, sa valeur étant positionnée entre 0.0 et 1.0 dans l'adresse de contact AoC du terminal. Ainsi, dans le cas de plusieurs terminaux partageant la même identité publique IMPU (multi-terminal), l'opérateur peut définir d'utiliser un serveur P-CSCF moins performant ou une chaîne de P-CSCF moins robuste (par exemple en cas de panne d'un P-CSCF ou de problèmes réseaux) pour les terminaux moins prioritaires (terminaux secondaires).
- à la demande par le terminal d'utiliser un tunnel IPSec pour transporter la signalisation d'appel SIP jusqu'au P-CSCF, cette information étant présente dans un champ « SIP security-client » et « Require » du message REGISTER. L'utilisation de tunnel IP Sec étant couteuse en termes de ressources, l'utilisation de ce critère permet de sélectionner un serveur P-CSCF plus ou moins performant selon que le terminal nécessite l'utilisation des tunnels IPsec pour les communications VxLTE, VxWifi.
- à l'identité temporaire dérivée de l'IMSI du terminal, qui est présente dans les champs FROM ou TO du message REGISTER, sous la forme IMSI@ims.MNCxxx.MCCyyy.3gppnetwork.org. Un sous-ensemble de l'IMSI (Mobile Network Code et Mobile Country Code) peut être retrouvé dans le nom de domaine présent dans la Request URI du message REGISTER. Ce critère permet de traiter via un P-CSCF dédié des appels pour des terminaux en situation de Roamers-In (c'est -à-dire des terminaux d'un autre opérateur enregistré dans le réseau de l'opérateur du réseau RES). En exploitant le MCC (Mobile Country code = yyy) et/ou le MNC (Mobile Network Code = xxx), il est possible de sélectionner un P-CSCF dédié par exemple pour traiter de tels appels avec un niveau de QoS moindre, ou pour faciliter la traçabilité, ou pour faciliter le routage, ou pour activer des fonctionnalités spécifiques...
- à une demande d'appel d'urgence en provenance du terminal, cette information est indiquée dans le champ « sos » dans l'adresse de contact du terminal. Elle indique explicitement que le terminal souhaite s'enregistrer sur le réseau pour passer un appel d'urgence. Comme la procédure de N° d'urgence est complexe et nécessite des fonctions spécifiques au niveau P-CSCF (EATF pour l'ancrage des appels d'urgence de sorte à permettre une mobilité vers CS (Circuit Switch) 2G/3G, mécanisme pour retrouver la localisation réseau trusted-vérifiée du terminal, etc...), il est ainsi possible de sélectionner un P-CSCF dédié au traitement des appels d'urgences.

On suppose selon un premier exemple, que les critères de sélection sont définis par l'opérateur comme suit :
- le serveur P-CSCF P1 est dédié aux terminaux basés sur le système d'exploitation OS1,
- le serveur P-CSCF P2 est dédié aux terminaux basés sur le système d'exploitation OS2,
- le serveur P-CSCF P3 est dédié aux terminaux fixes.

On suppose ici que le terminal Ti correspond au terminal T1 de la figure 1. Lors d'une étape E20, le terminal T1 envoie au serveur proxy Prx un message SIP REGISTER comprenant notamment dans un champ User Agent SIP la valeur OS1.

Lors d'une étape E21, le serveur proxy Prx obtient la valeur OS1 du champ User Agent SIP du message SIP REGISTER reçu en provenance du terminal T1. Le champ User Agent SIP est représentatif d'une caractéristique propre au terminal puisqu'il comprend notamment un identifiant du système d'exploitation du terminal.

Lors d'une étape E22, le serveur proxy Prx sélectionne à partir de la valeur OS1 obtenue le serveur P-CSCF P1 parmi les serveurs P-CSCF P1 à P3.

Lors d'une étape E23, le serveur proxy Prx envoie au terminal T1 un message SIP 302 MOVED comprenant l'adresse IP du serveur P-CSCF P1 sélectionné.

Lors d'une étape E24, le terminal T1 envoie alors un nouveau message SIP REGISTER au serveur P-CSCF P1 afin de s'enregistrer sur le réseau de communication RES.

Lors des enregistrements SIP subséquents, le terminal T1 envoie (étape E25) les messages SIP REGISTER directement au serveur P-CSCF P1 sans passer par le serveur proxy Prx.

On suppose maintenant que le terminal Ti correspond au terminal T2 de la figure 1. Lors de l'étape E20, le message SIP REGISTER envoyé par le terminal T2 au serveur proxy Prx comprend notamment dans un champ User Agent SIP la valeur OS2.

Lors de l'étape E21, le serveur proxy Prx obtient la valeur OS2 du champ User Agent SIP du message SIP REGISTER reçu en provenance du terminal T2 et sélectionne, lors de l'étape E22, à partir de la valeur OS2 obtenue, le serveur P-CSCF P2 parmi les serveurs P-CSCF P1 à P3. Lors de l'étape E23, le serveur proxy Prx envoie au terminal T2 un message SIP 302 MOVED comprenant l'adresse IP du serveur P-CSCF P2 sélectionné pour que le terminal T2 envoie au serveur P-CSCF P2 ses messages d'enregistrement SIP (étape E24 et E25).

Il apparait que selon l'invention, le serveur proxy Prx permet de sélectionner un serveur P-CSCF en fonction d'une caractéristique propre au terminal qui souhaite s'enregistrer.

On suppose maintenant que le terminal Ti correspond au terminal T3 de la figure 1. Lors de l'étape E20, le message SIP REGISTER envoyé par le terminal T3 au serveur proxy Prx comprend notamment dans un champ FROM ou TO la valeur +332365896 correspondant à son identité publique. Lors de l'étape E21, le serveur proxy Prx obtient cette valeur et identifie qu'il s'agit d'une identité liée à un réseau fixe. Le serveur proxy Prx sélectionne alors le serveur P-CSCF P3 (étape E22) et envoie au terminal T3 (étape E23) un message SIP 302 MOVED comprenant l'adresse IP du serveur P-CSCF P3 sélectionné pour que le terminal T3 envoie au serveur P-CSCF P3 ses messages d'enregistrement SIP (étape E24 et E25).

Selon d'autres variantes de réalisation, l'opérateur peut définir d'autres critères de sélection à utiliser à la place des critères définis ci-dessus ou en combinaison avec ceux-ci. Dans ce cas, le serveur Prx obtient les valeurs des champs du message SIP REGISTER correspondant à ces critères de sélection.

Selon un autre mode particulier de réalisation de l'invention, lors de l'étape E23, le serveur proxy Prx insère également dans le message de redirection un numéro de port et un protocole de transport à utiliser entre le terminal Ti et le serveur P-CSCF Pj sélectionné pour communiquer. Le serveur proxy Prx détermine le numéro de port et le protocole de transport par exemple à partir du champ « features tags » du message SIP REGISTER reçu lors de l'étape E20. Pour le terminal T1, un tel champ contient par exemple la valeur « +g.oma.sip-im ». Une telle valeur indique que le terminal T1 supporte le service RCS (pour Rich Communication Suite). Lors de l'étape E22, le serveur proxy Prx sélectionne alors pour le terminal T1 le serveur P-CSCF P1 puisque le système d'exploitation du terminal T1 est OS1 et détermine que le terminal T1 doit utiliser le numéro de port 5080 et le protocole de transport TCP pour communiquer avec le serveur P-CSCF P1.

Selon un autre mode particulier de réalisation de l'invention, dans lequel le terminal T1 et le terminal T3 sont associés à une même identité publique, lorsque le serveur proxy Prx reçoit un message d'enregistrement en provenance du terminal T3, le serveur proxy détermine que le terminal T1 associé à la même identité publique a au préalable été enregistré via le P-CSCF P1. Selon ce mode particulier de réalisation de l'invention, l'opérateur a spécifié que des terminaux partageant une même identité publique doivent être enregistrés sur un même P-CSCF. Dans ce mode particulier de réalisation de l'invention, le serveur proxy Prx sélectionne alors lors de l'étape E22, sur la base de l'IMPU du terminal T3 le serveur P-CSCF P1. En variante, le serveur proxy Prx prend en compte également la valeur q du paramètre de priorité du terminal T3. Selon cette variante, le serveur proxy Prx sélectionne le serveur P-CSCF P1 si le terminal T3 possède aussi une valeur de priorité q identique ou supérieure à celle du terminal T1. Dans le cas où le terminal T3 possède une valeur de priorité q inférieure au terminal T1, le serveur proxy Prx sélectionne le serveur P-CSCF P3 par exemple.

La figure 3 illustre schématiquement un dispositif Prx de sélection d'un serveur d'entrée apte à mettre en œuvre le procédé de sélection d'un serveur d'entrée d'un réseau de communication IMS selon un mode particulier de réalisation de l'invention.

Le dispositif Prx a l'architecture classique d'un ordinateur. Le dispositif Prx comprend un module de stockage MEMP, par exemple une mémoire, un module de traitement PROCP, équipé par exemple d'un microprocesseur, et piloté par un programme d'ordinateur PGP. A l'initialisation, les instructions de code du programme d'ordinateur PGP sont par exemple chargées en mémoire MEMP avant d'être exécutées par le processeur du module de traitement PROCP.

Selon les instructions du programme d'ordinateur PGP, le processeur du module de traitement PROCP met en œuvre les étapes du procédé de sélection d'un serveur d'entrée d'un réseau de communication IMS tel que décrit en relation avec la figure 2. Le processeur du module de traitement PROCR met notamment en œuvre les étapes de réception en provenance d'un terminal d'un message d'enregistrement envoyé selon le protocole SIP, d'obtention d'une valeur d'au moins un champ du message d'enregistrement SIP, ledit champ étant représentatif d'une caractéristique propre au terminal, de sélection d'un serveur d'entrée, à partir d'au moins ladite valeur obtenue, et d'envoi au terminal d'un message SIP de redirection comprenant une adresse IP dudit serveur d'entrée sélectionné.

Le dispositif Prx comprend aussi un module de communication COMP adapté pour communiquer avec d'autres équipements via notamment le réseau de communication RES décrit en relation avec la figure 1. Le module de communication COMP coopère avec le module de traitement PROCP pour permettre notamment au dispositif Prx de recevoir un message d'enregistrement SIP d'un terminal et d'envoyer au terminal un message SIP de redirection.

Selon un mode particulier de réalisation de l'invention, le dispositif Prx est compris dans un serveur.

La figure 4 illustre schématiquement un terminal Ti apte à mettre en œuvre le procédé d'enregistrement du terminal Ti au sein d'un réseau de communication IMS selon un mode particulier de réalisation de l'invention.

Le terminal Ti a l'architecture classique d'un terminal téléphonique ou d'un ordinateur. Le terminal Ti comprend un module de stockage MEMT, par exemple une mémoire, un module de traitement PROCT, équipé par exemple d'un microprocesseur, et piloté par un programme d'ordinateur PGT.

A l'initialisation, les instructions de code du programme d'ordinateur PGT sont par exemple chargées en mémoire MEMT avant d'être exécutées par le processeur du module de traitement PROCT.

Selon les instructions du programme d'ordinateur PGT, le processeur du module de traitement PROCT met en œuvre les étapes du procédé d'enregistrement du terminal Ti au sein d'un réseau de communication IMS tel que décrit en relation avec la figure 2. Le processeur du module de traitement PROCT met notamment en œuvre les étapes d'envoi d'un premier message d'enregistrement à un serveur proxy Prx du réseau de communication IMS, le premier message d'enregistrement comprenant au moins un champ représentatif d'une caractéristique propre au terminal, de réception, en provenance du serveur proxy Prx, d'un message de redirection comprenant une adresse IP d'un serveur d'entrée du réseau de communication IMS, le serveur d'entrée étant sélectionné à partir d'une valeur dudit au moins un champ, et d'envoi d'un deuxième message d'enregistrement audit serveur d'entrée du réseau de communication IMS.

Le terminal Ti comprend aussi un module de communication COMT adapté pour communiquer avec d'autres équipements via notamment le réseau de communication RES décrit en relation avec la figure 1. Le module de communication COMT coopère avec le module de traitement PROCT pour permettre notamment au terminal Ti d'envoyer un premier message d'enregistrement SIP au serveur proxy Prx, de recevoir un message SIP de redirection, et d'envoyer au serveur d'entrée sélectionné un deuxième message SIP d'enregistrement.

Selon un mode particulier de réalisation de l'invention, le terminal Ti est un smartphone, un téléphone fixe, ou mobile, une tablette, un softphone (téléphone logiciel), une passerelle domestique, etc ...

## Revendications

1. Procédé de sélection d'un serveur d'entrée (Pj) d'un réseau de communication IMS, mis en œuvre par un serveur proxy (Prx) dudit réseau, comprenant, suite à la réception (E20) en provenance d'un terminal (Ti), d'un message d'enregistrement envoyé selon le protocole SIP, les étapes suivantes :
- obtention (E21) d'une valeur d'au moins un champ du message d'enregistrement SIP, ledit champ étant représentatif d'une caractéristique propre au terminal,
- sélection (E22), à partir d'au moins ladite valeur obtenue, d'un serveur d'entrée ayant une configuration adaptée à ladite caractéristique,
- envoi (E23) au terminal d'un message SIP de redirection comprenant une adresse IP dudit serveur d'entrée sélectionné.

2. Procédé d'enregistrement au sein d'un réseau de communication IMS, mis en œuvre par un terminal (Ti), comprenant les étapes suivantes :
- envoi (E20) d'un premier message d'enregistrement à un serveur proxy (Prx) du réseau de communication IMS, ledit premier message d'enregistrement comprenant au moins un champ représentatif d'une caractéristique propre au terminal,
- réception (E23), en provenance du serveur proxy, d'un message de redirection comprenant une adresse IP d'un serveur d'entrée du réseau de communication IMS, le serveur d'entrée étant sélectionné à partir d'une valeur dudit au moins un champ et ayant une configuration adaptée à ladite caractéristique,
- envoi (E24) d'un deuxième message d'enregistrement audit serveur d'entrée (Pj) du réseau de communication IMS.

3. Procédé selon l'une quelconque des revendications 1 ou 2, dans lequel le champ du message d'enregistrement est un champ User Agent SIP.

4. Procédé selon l'une quelconque des revendications 1 ou 2, dans lequel le champ du message d'enregistrement est un champ SIP PANI.

5. Procédé selon l'une quelconque des revendications 1 ou 2, dans lequel le message de redirection comprend un numéro de port et un protocole déterminés par le serveur proxy en fonction d'un champ du message d'enregistrement reçu par le serveur proxy.

6. Procédé de sélection selon la revendication 1, dans lequel, ledit terminal est dit premier terminal, lorsque le serveur proxy reçoit un premier message d'enregistrement en provenance d'un autre terminal distinct du premier terminal et comprenant une identité publique identique à l'identité publique dudit premier terminal, le serveur proxy sélectionne pour l'autre terminal, le même serveur d'entrée que le serveur d'entrée sélectionné pour le premier terminal.

7. Serveur proxy d'un réseau de communication IMS, comprenant un module de traitement configuré pour, sur réception par un module de communication d'un message d'enregistrement envoyé selon le protocole SIP par un terminal:
- obtenir une valeur d'un champ du message d'enregistrement SIP, ledit champ étant représentatif d'une caractéristique propre au terminal,
- sélectionner, à partir de la valeur obtenue, un serveur d'entrée ayant une configuration adaptée à ladite caractéristique,
- commander l'envoi par le module de communication au terminal d'un message SIP de redirection comprenant une adresse IP dudit serveur d'entrée sélectionné.

8. Terminal comprenant un module de communication apte à :
- envoyer un premier message d'enregistrement à un serveur proxy du réseau de communication IMS, ledit premier message d'enregistrement comprenant au moins un champ représentatif d'une caractéristique propre au terminal,
- recevoir, en provenance du serveur proxy, un message de redirection comprenant une adresse IP d'un serveur d'entrée du réseau de communication IMS, le serveur d'entrée étant sélectionné à partir d'une valeur dudit au moins un champ et ayant une configuration adaptée à ladite caractéristique,
- envoyer un deuxième message d'enregistrement audit serveur d'entrée du réseau de communication IMS.

9. Programme d'ordinateur comportant des instructions de code de programme pour l'exécution des étapes du procédé de sélection selon l'une quelconque des revendications 1 ou 3 à 6, lorsque le programme est exécuté par un processeur.

10. Programme d'ordinateur comportant des instructions de code de programme pour l'exécution des étapes du procédé d'enregistrement selon l'une quelconque des revendications 2 à 5, lorsque le programme est exécuté par un processeur.

## Patentansprüche

1. Verfahren zur Auswahl eines Eingabeservers (Pj) eines IMS-Kommunikationsnetzwerks, das von einem Proxy-Server (Prx) des Netzwerks ausgeführt wird, umfassend, nach dem Empfangen (E20) einer von einem Endgerät (Ti) aus gemäß dem SIP-Protokoll gesendeten Registrierungsnachricht, die folgenden Schritte:
- Erhalten (E21) eines Werts mindestens eines Feldes der SIP-Registrierungsnachricht, wobei das Feld für ein charakteristisches Merkmal des Endgeräts repräsentativ ist,
- Auswählen (E22) eines Eingabeservers, der eine für das Merkmal geeignete Konfiguration aufweist, anhand mindestens des erhaltenen Werts,
- Senden (E23) einer SIP-Weiterleitungsnachricht an das Endgerät, die eine IP-Adresse des ausgewählten Eingabeservers umfasst.

2. Registrierungsverfahren in einem IMS-Kommunikationsnetzwerk, das von einem Endgerät (Ti) ausgeführt wird, umfassend die folgenden Schritte:
- Senden (E20) einer ersten Registrierungsnachricht an einen Proxy-Server (Prx) des IMS-Kommunikationsnetzwerks, wobei die erste Registrierungsnachricht mindestens ein Feld umfasst, das für ein charakteristisches Merkmal des Endgeräts repräsentativ ist,
- Empfangen (E23) einer Weiterleitungsnachricht vom Proxy-Server, die eine IP-Adresse eines Eingabeservers des IMS-Kommunikationsnetzwerks umfasst, wobei der Eingabeserver anhand eines Werts des mindestens einen Feldes ausgewählt wird und eine für das Merkmal geeignete Konfiguration aufweist,
- Senden (E24) einer zweiten Registrierungsnachricht an den Eingabeserver (Pj) des IMS-Kommunikationsnetzwerks.

3. Verfahren nach einem der Ansprüche 1 oder 2, bei dem das Feld der Registrierungsnachricht ein Feld User Agent SIP ist.

4. Verfahren nach einem der Ansprüche 1 oder 2, bei dem das Feld der Registrierungsnachricht ein Feld SIP PANI ist.

5. Verfahren nach einem der Ansprüche 1 oder 2, bei dem die Weiterleitungsnachricht eine Port-Nummer und ein Protokoll umfasst, die vom Proxy-Server in Abhängigkeit von einem Feld der vom Proxy-Server empfangenen Registrierungsnachricht bestimmt werden.

6. Verfahren zur Auswahl nach Anspruch 1, bei dem das Endgerät das erste Endgerät ist, wenn der Proxy-Server eine erste Registrierungsnachricht von einem anderen Endgerät empfängt, das von dem ersten Endgerät verschieden ist und eine öffentliche Identität umfasst, die identisch mit der öffentlichen Identität des ersten Endgeräts ist, der Proxy-Server für das andere Endgerät denselben Eingabeserver auswählt wie den Eingabeserver, der für das erste Endgerät auswählt wird.

7. Proxy-Server eines IMS-Kommunikationsnetzwerks, der ein Verarbeitungsmodul umfasst, das dazu ausgestaltet ist, beim Empfangen einer von einem Endgerät gemäß dem SIP-Protokoll gesendeten Registrierungsnachricht:
- einen Wert eines Feldes der SIP-Registrierungsnachricht zu erhalten, wobei das Feld für ein charakteristisches Merkmal des Endgeräts repräsentativ ist,
- anhand des erhaltenen Werts einen Eingabeserver auszuwählen, der eine für das Merkmal geeignete Konfiguration aufweist,
- das Senden einer SIP-Weiterleitungsnachricht durch das Kommunikationsmodul an das Endgerät zu steuern, die eine IP-Adresse des ausgewählten Eingabeservers umfasst.

8. Endgerät, das ein Kommunikationsmodul umfasst, welches dazu geeignet ist:
- eine erste Registrierungsnachricht an einen Proxy-Server des IMS-Kommunikationsnetzwerks zu senden, wobei die erste Registrierungsnachricht mindestens ein Feld umfasst, das für ein charakteristisches Merkmal des Endgeräts repräsentativ ist,
- vom Proxy-Server eine Weiterleitungsnachricht zu empfangen, die eine IP-Adresse eines Eingabeservers des IMS-Kommunikationsnetzwerks umfasst, wobei der Eingabeserver anhand eines Werts des mindestens einen Feldes ausgewählt wird und eine für das Merkmal geeignete Konfiguration aufweist,
- eine zweite Registrierungsnachricht an den Eingabeserver des IMS-Kommunikationsnetzwerks zu senden.

9. Computerprogramm mit Programmcodeanweisungen, die bei der Ausführung des Programms durch einen Prozessor die Schritte des Auswahlverfahrens nach einem der Ansprüche 1 oder 3 bis 6 ausführen.

10. Computerprogramm mit Programmcodeanweisungen, die bei der Ausführung des Programms durch einen Prozessor die Schritte des Registrierungsverfahrens nach einem der Ansprüche 2 bis 5 ausführen.

## Claims

1. Method for selecting an entry server (Pj) of an IMS communication network, implemented by a proxy server (Prx) of said network, comprising, following the reception (E20) from a terminal (Ti) of a registration message sent according to the SIP protocol, the following steps:
- obtaining (E21) of a value of at least one field of the SIP registration message, said field being representative of a characteristic specific to the terminal,
- selection (E22), from at least said obtained value, of an entry server having a configuration suited to said characteristic,
- sending (E23) to the terminal of an SIP redirect message comprising an IP address of said selected entry server.

2. Method for registering an IMS communication network, implemented by a terminal (Ti), comprising the following steps:
- sending (E20) of a first registration message to a proxy server (Prx) of the IMS communication network, said first registration message comprising at least one field representative of a characteristic specific to the terminal,
- reception (E23), from the proxy server, of a redirect message comprising an IP address of an entry server of the IMS communication network, the entry server being selected from a value of said at least one field and having a configuration suited to said characteristic,
- sending (E24) of a second registration message to said entry server (Pj) of the IMS communication network.

3. Method according to either of Claims 1 and 2, in which the field of the registration message is an SIP User Agent field.

4. Method according to either of Claims 1 and 2, in which the field of the registration message is an SIP PANI field.

5. Method according to either of Claims 1 and 2, in which the redirect message comprises a port number and a protocol determined by the proxy server as a function of a field of the registration message received by the proxy server.

6. Selection method according to Claim 1, in which said terminal is said first terminal, when the proxy server receives a first registration message from another terminal distinct from the first terminal and comprising a public identity identical to the public identity of said first terminal, the proxy server selects, for the other terminal, the same entry server as the entry server selected for the first terminal.

7. Proxy server of an IMS communication network, comprising a processing module configured to, on reception by a communication module of a registration message sent according to the SIP protocol by a terminal:
- obtain a value of a field of the SIP registration message, said field being representative of a characteristic specific to the terminal,
- select, from the obtained value, an entry server having a configuration suited to said characteristic,
- order the sending by the communication module to the terminal of an SIP redirect message comprising an IP address of said selected entry server.

8. Terminal comprising a communication module capable of:
- sending a first registration message to a proxy server of the IMS communication network, said first registration message comprising at least one field representative of a characteristic specific to the terminal,
- receiving, from the proxy server, a redirect message comprising an IP address of an entry server of the IMS communication network, the entry server being selected from a value of said at least one field and having a configuration suited to said characteristic,
- sending a second registration message to said entry server of the IMS communication network.

9. Computer program comprising program code instructions for the execution of the steps of the selection method according to any one of Claims 1 or 3 to 6, when the program is run by a processor.

10. Computer program comprising program code instructions for the execution of the steps of the registration method according to any one of Claims 2 to 5, when the program is run by a processor.
